# FASCICULE DE BREVET EUROPEEN

(11) **EP 1 373 108 B1**
(45) Date de publication et mention de la délivrance du brevet: **11.05.2005**
(21) Numéro de dépôt: 02727337.4
(22) Date de dépôt: 28.02.2002
(51) Int. Cl.: B65G 43/08

(54) **PROCEDE ET SYSTEME POUR SYNCHRONISER DES CHARGES AVANT L'INJECTION SUR UN SYSTEME DE TRI DU TYPE A PLATEAUX BASCULANTS**
VERFAHREN UND SYSTEM ZUM SYNCHRONISIEREN VON LADUNGEN VOR IHRER ÜBERGABE AUF EINE SORTIERANLAGE MIT KIPPBAREN FÖRDERFLÄCHEN
METHOD AND SYSTEM FOR SYNCHRONISING LOADS BEFORE INJECTION ON A TILT-TRAY-TYPE SORTING SYSTEM

(30) Priorité: 02.03.2001 FR 0102854
(43) Date de publication de la demande: 02.01.2004
(73) Titulaire: Fabricom S.A., 1180 Bruxelles (BE)
(72) Inventeur: BECK, David, Hull East Yorkshire HU8 0LH (GB); WOOD, Nathan, Hull East Yorkshire HU5 3ER (GB); DE VOS, Alain, B-1750 Lennik (BE)
(74) Mandataire: Pontet, Bernard
(86) Numéro de dépôt international: PCT/EP2002/002173
(87) Numéro de publication internationale: WO 2002/070380

(56) Documents cités:
- EP-A- 0 577 021
- US-A- 5 341 916

## Description

La présente invention concerne un procédé pour synchroniser des charges avant l'injection sur un système de tri, en particulier une machine de tri du type à plateaux basculants. Elle vise également un système pour la mise en oeuvre de ce procédé.

Ces machines sont constituées d'une chaîne de chariots circulant sur une voie, généralement en boucle mais qui peut aussi être en forme de circuit ferroviaire dans le cas de chariots semi-autonomes selon une technologie de type DCV, à une vitesse non nulle prédéterminée. Chacun des chariots est doté d'un plateau basculant, qui permet de décharger la charge portée à un emplacement prédéterminé, selon des processus connus.

L'invention porte sur la méthode d'injection, c'est à dire sur le processus permettant de charger un plateau prédéterminé avec une charge telle qu'un colis ou un bagage.

Notamment quand il s'agit de bagages, les charges présentent une grande variété de formes géométriques, de matériaux et de divers appendices (sangles, courroies, roulettes escamotables...) ainsi que des masses variables, qui rendent pratiquement imprévisible leur adhérence et par conséquent leur comportement cinématique.

L'invention décrit une méthode pour améliorer la fiabilité de l'injection, c'est à dire le positionnement correct de chaque charge prise individuellement sur un plateau d'une machine de tri.

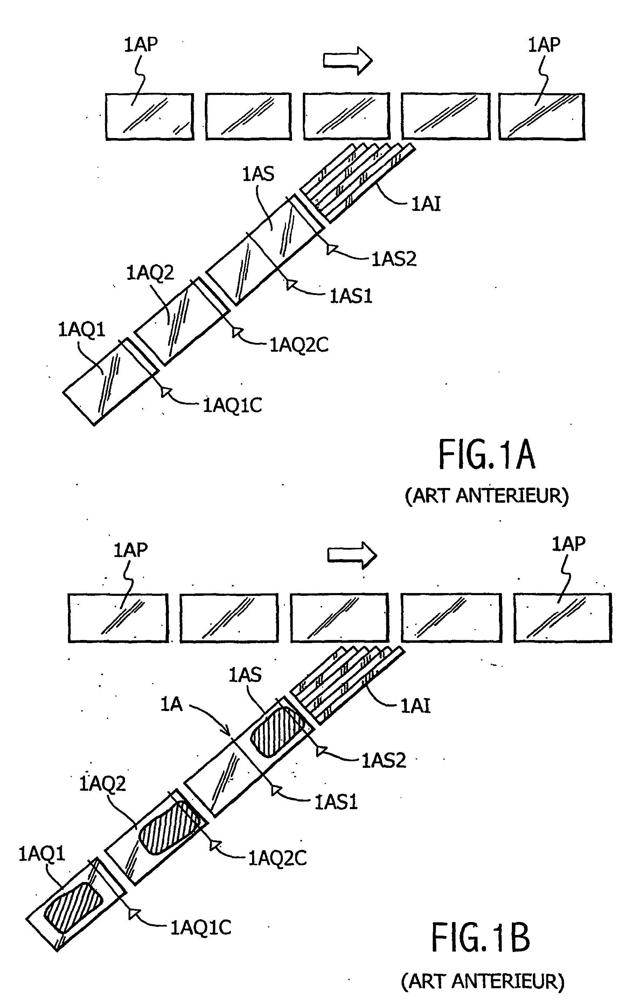

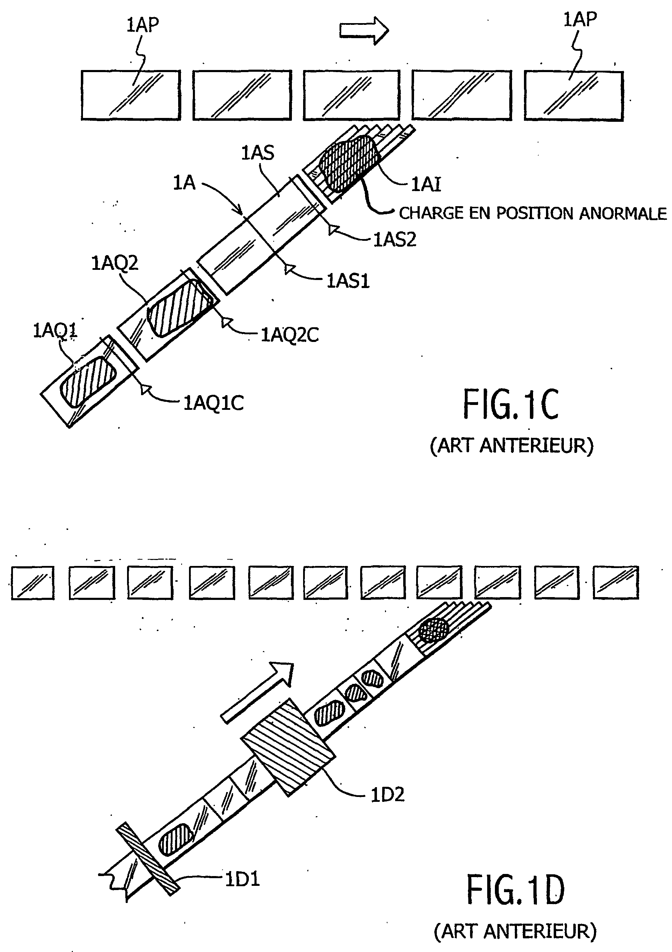

La figure 1 décrit schématiquement comment est construit un dispositif d'injection représentatif de l'état de la technique, le comportement d'une charge instable selon les méthodes connues d'injection et les moyens de détection de ce mauvais comportement.
La figure 1A décrit la construction d'une injection usuelle du type *marche*/*arrêt,* à l'aide de convoyeurs motorisés.
La figure 1B illustre le positionnement normal d'une charge avant injection sur une machine de tri.
La figure 1C illustre le positionnement anormal d'une charge glissante ou roulante sur une injection.
La figure 1D illustre la position d'une injection dans un circuit de contrôle de sûreté dans le cas d'un système de traitement des bagages.

Les flèches indiquent le sens de progression des charges.

Sur la figure 1A on a représenté en vue de dessus une suite de plateaux 1AP qui circulent à vitesse prédéterminée devant le dispositif d'injection qui comporte dans l'ordre de circulation des charges :
- deux convoyeurs 1AQ1, 1AQ2 du type « cadenceur » bien connus dans la technique, qui assurent la progression des charges une à une vers l'injection proprement site,
- un convoyeur 1AS dit de « synchronisation » dont la fonction est de positionner la charge dans une position permettant en mode balistique de la déposer sur un plateau,
- un dispositif d'injection 1AI généralement constitué d'un ensemble de bandes d'entraînement, qui assure cette dépose.

Les charges sont individuellement présentées au convoyeur 1AS selon des processus connus, qui consiste à les positionner un à un de telle sorte que leur bord avant occulte les cellules photoélectriques 1AQ1C, 1AQ2C.

Dès que le convoyeur 1AS est vidé de la charge précédente, ce convoyeur est mis en mouvement selon une loi d'accélération prédéterminée γ1 jusqu'à occultation de la cellule 1AS1, puis à une loi d'accélération prédéterminée γ2 jusqu'à occultation de la cellule 1AS2.

A ce stade, les dispositifs de commande assurent le démarrage simultané du convoyeur 1AS et du dispositif d'injection 1AI pour imprimer à la charge une vitesse dont la composante selon le sens de progression des plateau de la machine de tri est égale à la vitesse linéaire de dits plateaux.

A titre indicatif, une injection à 45 ° par rapport à la machine de tri signifie que cette vitesse d'injection est de l'ordre de √2 x la vitesse linéaire de la machine de tri. Les moyens de stabiliser la charge malgré la composante transverse sont connus. Ceci n'est réalisé que lorsque l'entraînement de la charge par les convoyeurs motorisés s'effectue sans glissement ni roulement notables, comme représenté à la figure 1B.

Lorsque la charge ne présente pas l'adhérence voulue ou encore est susceptible de rouler sur les convoyeurs, la situation est celle de la figure 1C, où la charge a dépassé la position d'occultation de la cellule 1AS2.

Dans l'état connu de la technique, on sait détecter cette situation, qui ne permet pas le pronostiquer une dépose correcte de la charge sur un plateau de la machine de tri.

Dans l'état connu de la technique, les automatismes de commande déclenchent une alarme (par exemple un arrêt et un signal lumineux) pour demander une intervention humaine.

Il existe dans l'état connu de la technique des injections, dites injections dynamiques ainsi conçues qu'elles n'arrêtent les charges que si la machine de tri ne présente pas assez de plateaux vides pour autoriser la continuité du mouvement de la charge.

Toutefois, dans le cas contraire, un arrêt d'attente est également prévu sur ce type d'injection, qui reproduit substantiellement le risque lié au glissement ou au roulement de la charge, tel que déjà décrit.

La gestion de tels incidents présente un certain nombre d'inconvénients connus, notamment lorsque l'injection intervient dans un système de traitement et de tri de bagages.

En effet, parmi les exigences de tels systèmes figure l'inspection systématique des bagages pour détection d'éventuels contenus suspects tels que des explosifs.

Cette détection s'effectue par l'insertion d'un appareillage spécialisé et de moyens de convoyage intermédiaires en amont de l'injection pour le tri final, comme illustré sur le diagramme de la figure 1D.

Cet appareillage comporte :
- des moyens d'identification (1D1) du bagage, par exemple la lecture optique d'un code à barres créé sur une étiquette lors de l'enregistrement du bagage,
- des moyens de détection de la présence éventuelle d'un contenu suspect (1 D2), tels que des appareils de vision à rayons X.

Les dispositifs de convoyage intermédiaires ainsi que l'injection doivent à partir de l'identification assurer par des procédés connus un suivi de position des bagages fiable, afin de garder trace de l'identification et du statut, suspect ou non, de chaque bagage contrôlé.

A titre d'exemple, il est habituel d'utiliser une machine de tri pour envoyer aussi bien les bagages sans risques vers leur destination finale (poste de chargement d'un avion) que les bagages à risque vers des postes d'inspection plus approfondie.

Le dérapage d'un bagage à l'injection crée donc une situation d'incertitude quant à la localisation d'un voire plusieurs bagages.

Dans les techniques d'injection connues, la détection d'un dérapage exige une intervention humaine qui consiste :
- soit, à dégager le bagage pour un traitement manuel,
- soit, à le repositionner de telle sorte qu'il occulte à nouveau la cellule 1AS2, ce qui permet à condition que les moyens de commande le tolèrent de poursuivre le processus normal en considérant que la perte de suivi est rectifiée.

Dans tous les cas, les dites interventions humaines se traduisent par :
- des coûts d'exploitation, liés à la disponibilité de suffisamment d'opérateurs compétents,
- des risques liés aux erreurs humaines au niveau de la sûreté.

A titre d'exemple, certaines installations de tri de bagages sont armées pour ce faire d'autant opérateurs que d'injections, grevant ainsi considérablement les dépenses d'exploitation.

Dans tous les cas, chaque arrêt d'injection se traduit par une perte de cadence préjudiciable au débit opérationnel du système.

Un procédé sensiblement comportant les caractéristiques de la préambule de la revendication 1 est, en outre, décrit dans EP-A- 0 577 021.

La présente invention a pour objectif de remédier à ces inconvénients en proposant un procédé d'injection qui permet, dans la plupart des cas, de rectifier automatiquement le positionnement des charges avant injection, de telle sorte que les interventions humaines et les coûts associés sont significativement réduits.

Cet objectif est atteint avec un procédé pour synchroniser des charges avant leur injection sur une machine de tri du type à plateaux basculants, cette machine comportant une suite de plateaux qui circulent à vitesse prédéterminée devant un système d'injection comprenant des moyens de convoyage pour assurer la progression des charges une à une vers un site d'injection, un convoyeur 1AS dit de « synchronisation » pour positionner une charge provenant desdits moyens de convoyage dans une position permettant en mode balistique de la déposer sur un plateau, un dispositif 1AI pour injecter une charge provenant dudit convoyeur de synchronisation sur la machine de tri, et des moyens pour détecter la position des charges au sein du système d'injection comprenant une cellule de détection disposée sensiblement à la sortie du convoyeur de synchronisation.

Suivant l'invention, lorsqu'une charge a dépassé la cellule de détection de sortie, on exécute les étapes suivantes :
- commande du convoyeur de synchronisation 1AS et du dispositif d'injection 1AI selon un mouvement inverse avec une faible accélération et une vitesse plafonnée à une valeur prédéterminée V_{AR} , de telle sorte que la charge revient occulter la cellule de détection de sortie 1 AS2,
- maintien de la commande de mouvement inverse jusqu'à ce que la cellule de détection de sortie 1AS2 ne soit plus occultée, puis pendant une durée prédéterminée, et
- commande du convoyeur de synchronisation selon un mouvement avant avec une faible accélération et une vitesse plafonnée à une valeur prédéterminée V_{AV} jusqu'à ce que la cellule de détection de sortie 1AS2 soit occultée.

Ce procédé vient également renforcer la sûreté des systèmes de traitement des bagages en rectifiant le suivi fiable des dits bagages.

Une caractéristique importante de la méthode est qu'elle n'exige habituellement aucun moyen matériel supplémentaire lors de la conception électromécanique des injections.

De plus, elle est applicable à des injections déjà en service, dans des installations existantes, ce qui par conséquent permet une diminution nette des charges d'exploitation de telles installations.

L'invention s'applique indifféremment aux injections connues de type start/stop, où chaque charge marque un arrêt pour synchronisation avec la machine de tri, ou aux injections de type dynamique, où cet arrêt n'intervient qu'en cas d'occupation des plateaux qui pourraient être visés selon un processus continu.

Le procédé de synchronisation selon l'invention comprend généralement les étapes suivantes :
- commande, selon une première loi de commande prédéterminée, desdits moyens de convoyage et du convoyeur de synchronisation en marche avant jusqu'à occultation d'une seconde cellule de détection,
- commande, selon une seconde loi de commande prédéterminée, du convoyeur de synchronisation en marche avant jusqu'à occultation de la cellule de détection de sortie,
- à l'issue d'une temporisation prédéterminée, test de la cellule de détection de sortie.

Ce procédé est alors caractérisé par les étapes suivantes :
- si ce test indique que ladite cellule de détection de sortie est encore occultée, commande du dispositif d'injection,
- si ladite cellule de détection de sortie n'est pas occultée, commande du convoyeur de synchronisation et du dispositif d'injection, selon une troisième loi de commande prédéterminée, en marche arrière jusqu'à occultation de la cellule de détection de sortie,
- maintien de la commande en marche arrière du convoyeur de synchronisation, suivant une quatrième loi de commande prédéterminée, jusqu'à ce que la cellule de détection de sortie ne soit plus occultée,
- commande d'arrêt du convoyeur de synchronisation 1AS pendant une durée prédéterminée, et
- commande du convoyeur de synchronisation en marche avant, suivant une cinquième loi de commande prédéterminée, jusqu'à occultation de la cellule de détection de sortie.

Les étapes successives de commande du convoyeur de synchronisation et du dispositif d'injection suivant l'une des première, seconde, troisième, quatrième et cinquième lois de commande sont avantageusement répétées jusqu'à ce que le test de la cellule de détection de sortie indique que ladite cellule de détection de sortie est encore occultée à l'issue d'une temporisation prédéterminée.

Le procédé de synchronisation selon l'invention est par exemple implémenté par programmation d'un organe de commande de synchronisation, en connexion avec la commande de moteurs d'entraînement du convoyeur de synchronisation et du dispositif d'injection, ledit organe de commande de synchronisation étant agencé pour recevoir des signaux délivrés par les cellules de sortie.

Il peut ainsi être implémenté dans une unité de commande de synchronisation spécifique ajoutée à un équipement de contrôle/commande d'injection pré-existant.

Dans cette configuration, on reproduit à l'identique, aux bornes de l'unité de commande spécifique, les signaux de commande des moteurs d'entraînement du convoyeur de synchronisation et du dispositif d'injection générés par l'équipement de commande pré-existant, et on fournit à l'unité de commande spécifique un signal d'alarme de perte de synchronisation généré par l'équipement de contrôle/commande pré-existant.

Suivant un autre aspect de l'invention, il est proposé un système pour synchroniser des charges avant leur injection sur une machine de tri du type à plateaux basculants, pour la mise en oeuvre du procédé de synchronisation selon l'une quelconque des revendications précédentes, caractérisé en ce qu'il comprend :
- des premiers moyens pour commander le convoyeur de synchronisation et le dispositif d'injection, lorsqu'une charge a dépassé la cellule de détection de sortie, dans un mouvement inverse avec une faible accélération et une vitesse plafonnée à une valeur prédéterminée V_{AR}, de telle sorte que la charge revient occulter la cellule de détection de sortie,
- ces premiers moyens de commande étant agencés pour être activés jusqu'à ce que la cellule de détection de sortie ne soit plus occultée, et pendant une durée prédéterminée :, et
- des seconds moyens pour commander le convoyeur dans un mouvement avant avec une faible accélération et une vitesse plafonnée à une valeur prédéterminée V_{AV} jusqu'à occulter la cellule de détection de sortie.

Le système de synchronisation selon l'invention peut être réalisé sous la forme d'une unité de commande spécifique dédiée à la synchronisation, transparente à une unité de contrôle-commande d'injection préexistante. Il peut en outre comprendre une cellule de détection complémentaire en substitution ou complément d'une cellule de détection de sortie pré existante.

Le système de synchronisation selon l'invention peut être mis en oeuvre sur un site d'injection de type dynamique comprenant au moins un convoyeur de synchronisation avec une position d'arrêt des charges et un capteur de synchronisation.

D'autres particularités et avantages de l'invention apparaîtront encore dans la description ci-après. Aux dessins annexés donnés à titre d'exemples non limitatifs,
- la figure 2A illustre, dans un premier mode de réalisation d'un système de synchronisation selon l'invention ; une séquence de mouvement arrière du convoyeur de synchronisation et du dispositif d'injection ;
- la figure 2B illustre, dans ce premier mode de réalisation, la poursuite de la séquence de mouvement arrière,
- la figure 2C illustre, dans ce premier mode de réalisation, une séquence suivante de mouvement avant du convoyeur de synchronisation et du dispositif d'injection, et
- la figure 3 illustre un second mode de réalisation d'un système de synchronisation selon l'invention.

Pour la mise en oeuvre du procédé de synchronisation selon l'invention, il est nécessaire que les moteurs d'entraînement du convoyeur de synchronisation 1AS et du dispositif injecteur 1AI soient dotés de deux sens de mouvement. La commande de ces moteurs doit en pratique être du type variateur, autorisant un contrôle prédéterminé des accélérations et de la vitesse d'entraînement.

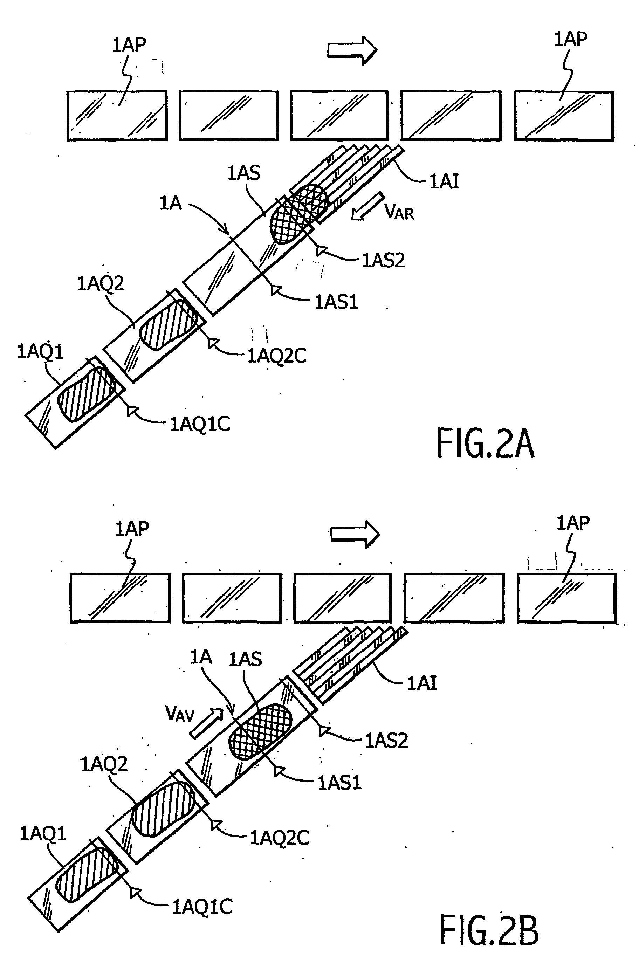

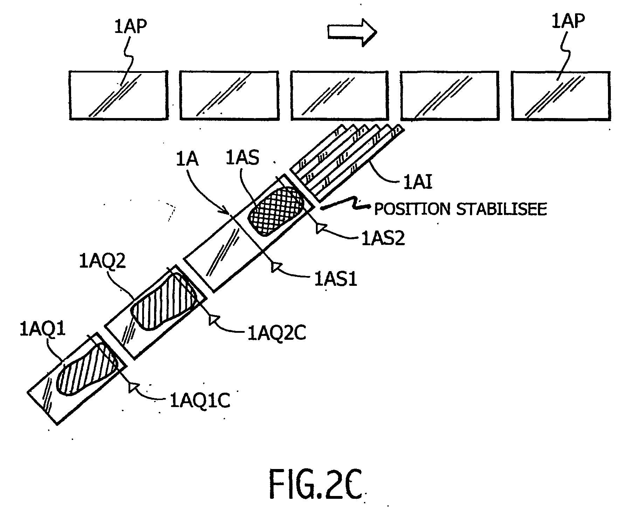

Lorsqu'une charge a dépassé la cellule de détection de sortie 1AS2, on opère, dans le cadre du procédé de synchronisation selon l'invention, les étapes suivantes :
- imprimer au convoyeur de synchronisation 1AS et au dispositif d'injection 1AI un mouvement inverse (Figure 2A) avec une faible accélération et une vitesse plafonnée à une valeur prédéterminée V_{AR}, de telle sorte que la charge revient normalement occulter la cellule 1AS2,
- poursuivre ce mouvement jusqu'à ce que la cellule 1AS2 ne soit plus occultée (Figure 2B), puis le poursuivre pendant une durée prédéterminée : à ce stade le moteur 1AI est restauré dans son sens et consigne de mouvement normal,
- imprimer au convoyeur un mouvement avant (Figure 2C) avec une faible accélération et une vitesse plafonnée à une valeur prédéterminée V_{AV} jusqu'à occulter la cellule 1AS2.

L'objectif du procédé de synchronisation selon l'invention qui vient d'être décrite est ainsi de recaler la charge dans la position normalement prévue avant le mouvement d'injection proprement dit.

Les valeurs de consigne de vitesse sont choisies de telle sorte qu'une majorité des charges instables à vitesse normale soient entraînées sans glisser et sans rouler.

Du fait que le procédé de synchronisation est automatique et que la seule charge existant sur le périmètre des convoyeurs 1AS et 1AI ne peut être que celle précédemment introduite à partir du convoyeur cadenceur 1AQ2, l'accomplissement complet de la manoeuvre restaure le suivi de la charge, i.e. l'association entre identité de la charge et position est retrouvée.

Le processus complet de synchronisation avec correction pour restaurer le positionnement et le suivi de la charge en cas de glissement ou de roulement de celle-ci, se décompose en étapes dont les quatre premières sont connues dans l'art antérieur, à savoir :
- 1) selon une première loi prédéterminée, le convoyeur 1AQ2 et le convoyeur de synchronisation 1 AS sont commandés en marche avant jusqu'à occultation de la cellule 1AS1,
- 2) selon une seconde loi prédéterminée, le convoyeur 1AS est commandé en marche avant jusqu'à occultation de la cellule 1AS2,
- 3) une temporisation prédéterminée est observée,
- 4) la cellule 1AS2 est à nouveau testée,
- 5) si cette cellule est encore occultée, on poursuit par le déclenchement du mouvement d'injection proprement dit, synchronisé avec le passage d'un plateau vide ; dans le cas contraire, une alarme est déclenchée pour solliciter une intervention humaine.

Bien entendu, chacune des étapes (1) à (3) est assortie d'une temporisation limite pour détection d'autres anomalies qui sortent du domaine de l'invention.

Le procédé de synchronisation selon l'invention consiste notamment à remplacer l'étape (5) par l'étape (6) et les étapes suivantes :
- 6) si la cellule est encore occultée, on poursuit par le déclenchement du mouvement d'injection proprement dit, sinon selon une troisième loi prédéterminée les convoyeurs 1AI et 1AS sont commandés en marche arrière jusqu'à occultation de la cellule 1AS2,
- 7) suivant une quatrième loi prédéterminée, le convoyeur 1AS poursuit sa marche arrière jusqu'à ce que la cellule 1AS2 ne soit plus occultée,
- 8) le convoyeur 1AS est stoppé, et une temporisation prédéterminée est observée (éventuellement nulle),
- 9) suivant une cinquième loi prédéterminée, le convoyeur 1AS est commandé en marche avant jusqu'à occultation de la cellule 1AS2,
- 10) on poursuit par les étapes (3) à (5).

Chacune des étapes de mouvement (6) à (9) est assortie d'une temporisation limite pour détection d'autre anomalies qui sortent du domaine de l'invention.

Techniquement, le procédé de synchronisation selon l'invention peut être réalisé par la programmation d'un organe de commande tel qu'un automate industriel de tout type connu, en connexion avec la commande des moteurs des convoyeurs 1AS et 1AI et les cellules 1AS1 et 1AS2.

Selon un premier mode de réalisation de l'invention, la méthode est avantageusement intégrée à l'injection dès sa conception.

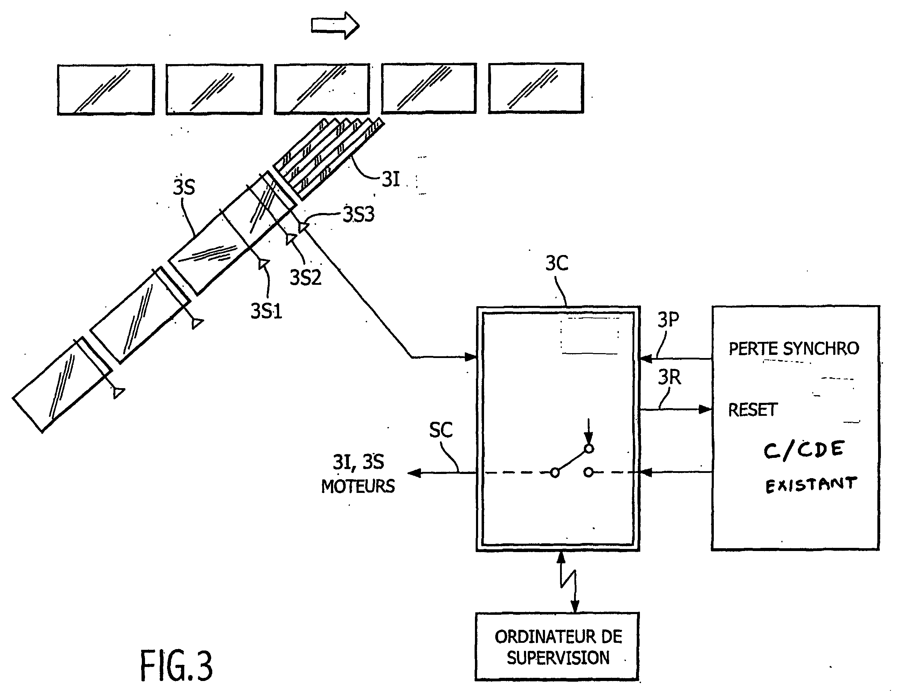

Selon un second mode de réalisation décrit à la Figure 3, le procédé de synchronisation selon l'invention est géré par un équipement spécifique qui vient s'ajouter à une injection pré existante. Avantageusement, ce second mode de réalisation est applicable à une installation de tri déjà en service régulier, sans qu'il soit besoin de retoucher ni la mécanique ni le contrôle-commande pré existants

L'intervention pour appliquer l'invention consiste à :
- remplacer ou modifier les variateurs de commande du convoyeur de synchronisation existant 3S et du dispositif d'injection existant 3I, pour obtenir les deux sens de mouvement ainsi qu'une gamme de consignes de vitesse permettant d'utiliser la méthode,
- reproduire à l'identique, aux bornes de l'unité de commande spécifique 3C les signaux de commande des moteurs SC connus du contrôle-commande pré existant,
- connecter à l'unité 3C le signal d'alarme « perte de synchronisation » 3P généré par le contrôle-commande pré existant,
- éventuellement, mettre en place une cellule complémentaire 3S3 si la position de la cellule pré existante 3S2 n'est pas convenable, et connecter soit 3S3, soit 3S2 en dérivation sur l'unité 3C,
- connecter une sortie de l'unité de commande spécifique 3C à l'entrée de restauration 3R du contrôle-commande existant,
- éventuellement, connecter l'unité de commande spécifique 3C à l'ordinateur de supervision de l'installation, par une liaison de transmission de données 3T.

En fonctionnement normal, l'unité de commande spécifique 3C qui peut être un automate industriel est complètement neutre et « transparente » pour le contrôle-commande existant.

Lorsque le signal d'alarme 3P est émis par le contrôle-commande existant, on sait par avance que ce dernier a interrompu tous les mouvements, en attente d'une intervention.

A partir de cet instant l'unité de commande spécifique 3C prend le contrôle des convoyeurs 3S et 3I, pour dérouler la méthode selon les étapes (6) à (9) déjà décrites, utilisant comme repère la cellule préexistante 3S2 ou la cellule auxiliaire 3S3.

Si la manoeuvre échoue (expiration de temporisateurs de garde) l'unité de commande spécifique 3C se contente de rendre la commande des moteurs au contrôle-commande pré existant.

Si la manoeuvre réussit, l'unité de commande spécifique 3C effectue une restauration du contrôle-commande existant, puis lui rend la commande des moteurs.

Toute installation de ce type est prévue pour reprendre son fonctionnement normal après une interruption telle qu'un défaut d'alimentation électrique. Donc après restauration, le contrôle-commande existant retrouve une situation normale et achèvera l'injection.

Généralement, le contrôle-commande existant aura généré vers l'ordinateur de supervision un message de défaut. C'est à cet effet qu'est prévue la liaison de transmission de données 3T, pour générer vers ce même ordinateur un message spécifique d'annulation de défaut.

Bien sûr, l'invention n'est pas limitée aux exemples qui viennent d'être décrits et de nombreux aménagements peuvent être apportés à ces exemples sans sortir du cadre de l'invention.

L'homme du métier comprendra aisément que l'invention s'étend naturellement aux injections de type dynamique, où existe au moins un convoyeur de synchronisation avec une position d'arrêt des charges et un capteur spécifique analogue aux cellules 1 AS2 ou 3S2 décrits ci-dessus. L'homme du métier comprendra également qu'il est aisé, par simple utilisation de relais, de créer des unités de commande spécifiques totalement transparentes à un contrôle-commande existant au niveau de la commande des moteurs. En ce cas, il suffit de couper l'alimentation de l'unité spécifique pour retrouver à l'identique le fonctionnement antérieur. Ce dernier point est important pour l'intervention sur des systèmes en service régulier, où l'on ne dispose généralement que de quelques heures par jour (exemple : fermeture la nuit d'un aéroport) pour la mise au point de la modification.

Ainsi, le procédé de synchronisation selon l'invention peut aussi bien être mis en oeuvre sur des systèmes nouveaux que sur des systèmes en service, apportant dans tous les cas une baisse significative du taux de défauts d'injection, et par conséquent un retour rapide d'investissement et/ou une meilleure performance des machines de tri.

Il est également important de noter qu'en terme de sûreté aéroportuaire, la diminution nette des pertes de suivi et des interventions humaines apporte un surcroît de qualité à la chaîne dite de contrôle des bagages de soute.

## Revendications

1. Procédé pour synchroniser des charges avant leur injection sur une machine de tri du type à plateaux basculants, cette machine comportant une suite de plateaux (1AP) qui circulent à vitesse prédéterminée devant un système d'injection comprenant des moyens de convoyage (1AQ1,1AQ2) pour assurer la progression des charges une à une vers un site d'injection, un convoyeur (1AS) dit de synchronisation pour positionner une charge provenant desdits moyens de convoyage dans une position permettant en mode balistique de la déposer sur un plateau, un dispositif (1AI) pour injecter une charge provenant dudit convoyeur de synchronisation sur la machine de tri, et des moyens pour détecter la position des charges au sein du système d'injection comprenant une cellule de détection (1AS2) disposée sensiblement à la sortie du convoyeur de synchronisation (1AS),
**caractérisé en ce que** lorsqu'une charge a dépassé la cellule de détection de sortie (1AS2) sans avoir la position normalement prévue, on exécute les étapes suivantes :
- commande du convoyeur de synchronisation (1AS) et du dispositif d'injection 1AI selon un mouvement inverse avec une faible accélération et une vitesse plafonnée à une valeur prédéterminée V_{AR}, de telle sorte que la charge revient occulter la cellule de détection de sortie (1AS2),
- maintien de la commande de mouvement inverse jusqu'à ce que la cellule de détection de sortie (1AS2) ne soit plus occultée, puis pendant une durée prédéterminée, et
- commande du convoyeur de synchronisation selon un mouvement avant avec une faible accélération et une vitesse plafonnée à une valeur prédéterminée V_{AV} jusqu'à ce que la cellule de détection de sortie (1AS2) soit occultée.

2. Procédé selon la revendication 1, comprenant les étapes suivantes :
- commande, selon une première loi de commande prédéterminée, desdits moyens de convoyage et du convoyeur de synchronisation (1AS) en marche avant jusqu'à occultation d'une seconde cellule de détection (1AS1),
- commande, selon une seconde loi de commande prédéterminée, du convoyeur de synchronisation (1AS) en marche avant jusqu'à occultation de la cellule de détection de sortie (1AS2),
- à l'issue d'une temporisation prédéterminée, test de la cellule de détection de sortie (1AS2),
**caractérisé par** les étapes suivantes :
- si ce test indique que adite cellule de détection de sortie (1AS2) est encore occultée, commande du dispositif d'injection (1AI),
- si ladite cellule de détection de sortie (1AS2) n'est pas occultée, commande du convoyeur de synchronisation (1AS)et du dispositif d'injection (1AI), selon une troisième loi de commande prédéterminée, en marche arrière jusqu'à occultation de la cellule de détection de sortie (1AS2),
- maintien de la commande en marche arrière du convoyeur de synchronisation (1AS), suivant une quatrième loi de commande prédéterminée, jusqu'à ce que la cellule de détection de sortie (1AS2) ne soit plus occultée,
- commande d'arrêt du convoyeur de synchronisation (1AS) pendant une durée prédéterminée, et
- commande du convoyeur de synchronisation (1AS) en marche avant, suivant une cinquième loi de commande prédéterminée, jusqu'à occultation de la cellule de détection de sortie.

3. Procédé de synchronisation selon la revendication 2, **caractérisé en ce que** les étapes successives de commande du convoyeur de synchronisation et du dispositif d'injection suivant successivement les première, seconde, troisième, quatrième et cinquième lois de commande sont répétées jusqu'à ce que le test de la cellule de détection de sortie indique que ladite cellule de détection de sortie est encore occultée à l'issue d'une temporisation prédéterminée.

4. Procédé selon l'une quelconque des revendications précédentes, **caractérisé en ce qu'**il est implémenté par programmation d'un organe de commande de synchronisation, en connexion avec la commande de moteurs d'entraînement du convoyeur de synchronisation (1AS) et du dispositif d'injection (1AI), ledit organe de commande de synchronisation étant agencé pour recevoir des signaux délivrés par les cellules de sortie (1AS1) et (1AS2).

5. Procédé selon l'une quelconque des revendications précédentes, **caractérisé en ce qu'**il est implémenté dans une unité de commande de synchronisation spécifique ajoutée à un équipement de contrôle/commande d'injection pré-existant.

6. Procédé selon la revendication 5, **caractérisé par** les étapes suivantes :
- on reproduit à l'identique, aux bornes de l'unité de commande spécifique (3C), les signaux de commande des moteurs (SC) d'entraînement du convoyeur de synchronisation et du dispositif d'injection générés par l'équipement de commande pré-existant, et
- on fournit à l'unité de commande spécifique (3C) un signal d'alarme de perte de synchronisation (3P) généré par l'équipement de contrôle/commande pré-existant.

7. Système pour synchroniser des charges avant leur injection sur une machine de tri du type à plateaux basculants, pour la mise en oeuvre du procédé de synchronisation selon l'une quelconque des revendications précédentes, ladite machine comportant une suite de plateaux (1AP) qui circulent à vitesse prédéterminée devant un système d'injection comprenant des moyens de convoyage (1AQ1,1AQ2) pour assurer la progression des charges une à une vers un site d'injection, un convoyeur (1AS) dit de synchronisation pour positionner une charge provenant desdits moyens de convoyage dans une position permettant en mode balistique de la déposer sur un plateau, un dispositif (1AI) pour injecter une charge provenant dudit convoyeur de synchronisation sur la machine de tri, et des moyens pour détecter la position des charges au sein du système d'injection comprenant une cellule de détection (1AS2) disposée sensiblement à la sortie du convoyeur de synchronisation (1AS), **caractérisé en ce qu'**il comprend :
- des premiers moyens pour commander le convoyeur de synchronisation (1AS) et le dispositif d'injection (1AI), lorsqu'une charge a dépassé la cellule (1AS2) sans avoir la position normalement prévue, dans un mouvement inverse avec une faible accélération et une vitesse plafonnée à une valeur prédéterminée V_{AR}, de telle sorte que la charge revient occulter la cellule (1AS2),
- ces premiers moyens de commande étant agencés pour être activés jusqu'à ce que la cellule (1AS2) ne soit plus occultée, et pendant une durée prédéterminée :, et
- des seconds moyens pour commander le convoyeur dans un mouvement avant avec une faible accélération et une vitesse plafonnée à une valeur prédéterminée V_{AV} jusqu'à occulter la cellule (1AS2).

8. Système selon la revendication 7, **caractérisé en ce qu'**il est réalisé sous la forme d'une unité de commande spécifique dédiée à la synchronisation, transparente à une unité de contrôle-commande d'injection pré-existante.

9. Système selon la revendication 8, **caractérisé en ce qu'**il comprend en outre une cellule de détection complémentaire (3S3) en substitution ou complément d'une cellule de détection de sortie pré existante (3S2).

10. Système selon l'une des revendications 8 à 9, **caractérisé en ce que** l'unité de commande spécifique (3C) est connecté à un ordinateur de supervision de l'installation de tri, par une liaison de transmission de données (3T), notamment pour transmettre un message de défaut et un message d'annulation de défaut.

11. Système selon l'une quelconque des revendications 7 à 10, **caractérisé en ce qu'**il est mis en oeuvre sur un site d'injection de type dynamique comprenant au moins un convoyeur de synchronisation avec une position d'arrêt des charges et un capteur de synchronisation.

12. Application du procédé de synchronisation selon l'une quelconque des revendications 1 à 6 à un système de tri de bagage nouveau.

13. Application du procédé de synchronisation selon l'une quelconque des revendications 1 à 6 à un système de tri de bagage existant.

## Patentansprüche

1. Verfahren zum Synchronisieren von Ladungen vor ihrer Einspeisung in eine Sortieranlage mit Kippschalen, wobei diese Anlage eine Folge von Schalen (1AP) aufweist, die mit vorbestimmter Geschwindigkeit vor einem Einspeisungssystem umlaufen, das Fördermittel (1AQ1, 1AQ2) zur Vorbewegung der Ladungen nacheinander auf eine Einspeisungsstation zu, einen Synchronisationsförderer genannten Förderer (1AS) zum Positionieren einer von den Fördermitteln kommenden Ladung in einer Lage, die ihre Ablage auf einer Schale im ballistischen Modus gestattet, eine Vorrichtung (1AI) zur Einspeisung einer von dem Synchronisationsförderer kommenden Ladung in die Sortieranlage und Mittel zum Erfassen der Lage der Ladungen in dem Einspeisungssystem aufweist, die eine Erfassungszelle (1AS2) umfassen, die im wesentlichen am Ausgang des Synchronisationsförderers (1AS) angeordnet ist, **dadurch gekennzeichnet, dass**, wenn eine Ladung die Ausgangserfassungszelle (1AS2) passiert hat, ohne die normal vorgesehene Lage zu haben, man die folgenden Schritte ausführt:
- Steuerung des Synchronisationsförderers (1AS) und der Einspeisevorrichtung (1AI) in einer umgekehrten Bewegung mit einer leichten Beschleunigung und einer Geschwindigkeit mit einem vorbestimmten Höchstwert V_{AR} so, dass die Ladung wieder die Ausgangserfassungszelle (1AS2) verdeckt,
- Aufrechterhaltung der Steuerung der umgekehrten Bewegung, bis die Ausgangserfassungszelle (1AS2) nicht mehr verdeckt ist, und dann während einer vorbestimmten Zeit, und
- Steuerung des Synchronisationsförderers in einer Vorbewegung mit einer leichten Beschleunigung und einer Geschwindigkeit mit einem vorbestimmten Höchstwert V_{AV}, bis die Ausgangserfassungszelle (1AS2) verdeckt ist.

2. Verfahren nach Anspruch 1, umfassend die folgenden Schritte:
- Steuerung der Fördermittel und des Synchronisationsförderers (1AS) im Vorwärtsgang gemäß einer vorbestimmten Steuergesetzmäßigkeit bis zum Verdecken einer zweiten Erfassungszelle (1AS1),
- Steuerung des Synchronisationsförderers (1AS) im Vorwärtsgang gemäß einer zweiten vorbestimmten Steuergesetzmäßigkeit bis zum Verdecken der Ausgangserfassungszelle (1AS2),
- nach einer vorbestimmten Verzögerung Test der Ausgangserfassungszelle (1AS2),
**gekennzeichnet durch** die folgenden Schritte:
- wenn der Test ergibt, dass die Ausgangserfassungszelle (1AS2) noch verdeckt ist, Steuerung der Einspeisevorrichtung (1AI),
- wenn die Ausgangserfassungszelle (1AS2) nicht verdeckt ist, Steuerung des Synchronisationsförderers (1AS) und der Einspeisevorrichtung (1AI) im Rückwärtsgang gemäß einer dritten vorbestimmten Steuergesetzmäßigkeit bis zum Verdekken der Ausgangserfassungszelle (1AS2),
- Aufrechterhalten der Steuerung des Synchronisationsförderers (1AS) im Rückwärtsgang gemäß einer vierten vorbestimmten Steuergesetzmäßigkeit, bis die Ausgangserfassungszelle (1AS2) nicht mehr verdeckt ist,
- Steuerung des Stillstands des Synchronisationsförderers (1AS) während einer vorbestimmten Zeit, und
- Steuerung des Synchronisationsförderers (1AS) im Vorwärtsgang gemäß einer fünften vorbestimmten Steuergesetzmäßigkeit bis zum Verdecken der Ausgangserfassungszelle.

3. Synchronisationsverfahren nach Anspruch 2, **dadurch gekennzeichnet, dass** die aufeinanderfolgenden Schritte der Steuerung des Synchronisationsförderers und der Einspeisevorrichtung gemäß der ersten, zweiten, dritten, vierten und fünften Steuergesetzmäßigkeit wiederholt werden, bis der Test der Ausgangserfassungszelle ergibt, dass die Austrittserfassungszelle nach einer vorbestimmten Verzögerung noch verdeckt ist.

4. Verfahren nach einem der vorhergehenden Ansprüche, **dadurch gekennzeichnet, dass** es durch Programmierung eines Synchronisationssteuerorgans implementiert ist, das mit der Steuerung der Antriebsmotoren des Synchronisationsförderers (1AS) und der Einspeisevorrichtung (1AI) in Verbindung ist, wobei dieses Synchronisationssteuerorgan dafür ausgelegt ist, von den Ausgangszellen (1AS1) und (1AS2) gelieferte Signale aufzunehmen.

5. Verfahren nach einem der vorhergehenden Ansprüche, **dadurch gekennzeichnet, dass** es in eine spezifische Synchronisationssteuereinheit implementiert ist, die einer bereits vorhandenen Einspeisungskontroll- und -steuereinrichtung beigegeben ist.

6. Verfahren nach Anspruch 5, **gekennzeichnet durch** die folgenden Schritte:
- man reproduziert auf identische Weise an den Anschlüssen der spezifischen Steuereinheit (3C) die von der bereits vorhandenen Steuereinrichtung erzeugten Signale zur Steuerung der Antriebsmotoren (SC) des Synchronisationsförderers und der Einspeisevorrichtung und
- man liefert der spezifischen Steuereinheit (3C) ein **durch** die bereits vorhandene Kontroll- und Steuereinrichtung erzeugtes Synchronisationsverlust-Warnsignal (3P).

7. System zum Synchronisieren von Ladungen vor ihrer Einspeisung in eine Sortieranlage mit Kippschalen für die Durchführung des Synchronisationsverfahrens nach einem der vorhergehenden Ansprüche, wobei diese Anlage eine Folge von Schalen (1AP) aufweist, die mit vorbestimmter Geschwindigkeit vor einem Einspeisungssystem umlaufen, das Fördermittel (1AQ1, 1AQ2) zur Vorbewegung der Ladungen nach einander auf eine Einspeisungsstation zu, einen Synchronisationsförderer genannten Förderer (1AS) zum Positionieren einer von den Fördermitteln kommenden Ladung in einer Lage, die ihre Ablage auf einer Schale im ballistischen Modus gestattet, eine Vorrichtung (1AI) zur Einspeisung einer von dem Synchronisationsförderer kommenden Ladung in die Sortieranlage und Mittel zum Erfassen der Lage der Ladungen in dem Einspeisungssystem aufweist, die eine Erfassungszelle (1AS2) umfassen, die im wesentlichen am Ausgang des Synchronisationsförderers (1AS) angeordnet ist, **dadurch gekennzeichnet, dass** es folgendes umfasst:
- erste Mittel zum Steuern des Synchronisationsförderers (1AS) und der Einspeisevorrichtung (1AI), wenn eine Ladung die Zelle (1AS2) passiert hat, ohne die normal vorgesehene Lage zu haben, in einer umgekehrten Bewegung mit einer leichten Beschleunigung und einer Geschwindigkeit mit einem vorbestimmten Höchstwert V_{AR} so, dass die Ladung wieder die Zelle (1AS2) verdeckt,
- wobei diese ersten Steuermittel dafür ausgelegt sind, aktiviert zu sein, bis die Zelle (1AS2) nicht mehr verdeckt ist, und während einer vorbestimmten Zeit, und
- zweite Mittel zum Steuern des Förderers in einer Vorbewegung mit einer leichten Beschleunigung und einer Geschwindigkeit mit einem vorbestimmten Höchstwert V_{AV}, bis die Zelle (1AS2) verdeckt wird.

8. System nach Anspruch 7, **dadurch gekennzeichnet, dass** es in der Form einer für die Synchronisation bestimmten spezifischen Steuereinheit ausgeführt ist, die für eine bereits vorhandene Einspeisungskontroll- und -steuereinheit transparent ist.

9. System nach Anspruch 8, **dadurch gekennzeichnet, dass** es außerdem eine zusätzliche Erfassungszelle (3S3) als Ersatz oder zur Ergänzung einer bereits vorhandenen Ausgangserfassungszelle (3S2) aufweist.

10. System nach einem der Ansprüche 8 bis 9, **dadurch gekennzeichnet, dass** die spezifische Steuereinheit (3C) mit einem Rechner zur Überwachung der Sortieranlage durch eine Datenübertragungsverbindung (3T) verbunden ist, um insbesondere eine Fehlermeldung und eine Fehlerbehebungsmeldung zu übertragen.

11. System nach einem der Ansprüche 7 bis 10, **dadurch gekennzeichnet, dass** es an einer dynamischen Einspeisungsstation eingesetzt ist, die mindestens einen Synchronisationsförderer mit einer Ladungs-Anhaltestellung und einem Synchronisationsfühler aufweist.

12. Anwendung des Synchronisationsverfahrens nach einem der Ansprüche 1 bis 6 auf ein neues Gepäcksortiersystem.

13. Anwendung des Synchronisationsverfahrens nach einem der Ansprüche 1 bis 6 auf ein vorhandenes Gepäcksortiersystem.

## Claims

1. Method for synchronizing loads before their injection onto a tilt tray type sorting machine, this machine comprising a set of trays (1AP) moving at a pre-determined speed in front of an injection system comprising conveyor means (1AQ1, 1AQ2) to advance the loads one by one towards an injection site, a so called synchronization conveyor (1AS) to position a load coming from the said conveyor means in a position allowing for it to be placed on a tray in ballistic mode, a device (1AI) for injecting a load coming from the said synchronization conveyor onto the sorting machine, and means of detecting the position of the loads within the injection system comprising a detection cell (1AS2) arranged approximately at the exit of the synchronization conveyor (1AS),
**characterized in that** when a load has overshot the exit detection cell (1AS2) without having the normally expected position, the following stages take place:
- control of the synchronization conveyor (1AS) and the injection device 1AI according to a reverse movement with slight acceleration and a top speed of a pre-determined value V_{AR}, so that the load returns to obscure the exit detection cell (1AS2),
- continuation of the reversal control until the exit detection cell (1AS2) is no longer obscured, and then for a pre-determined period, and
- control of the synchronization conveyor according to a forward movement with slight acceleration and a top speed of a pre-determined value V_{AV} until the exit detection cell (1AS2) is obscured.

2. Method according to claim 1, comprising the following stages:
- control of the said conveyor means and the synchronization conveyor (1AS) in a forward movement according to a first pre-determined control law, until a second detection cell (1AS1) is obscured,
- control of the synchronization conveyor (1AS) in a forward movement according to a second pre-determined control law, until the exit detection cell (1AS2) is obscured,
- at the end of a pre-determined dwell time, testing of the exit detection cell (1AS2),
**characterized by** the following stages:
- if this test shows that the said exit detection cell (1AS2) is still obscured, operation of the injection device (1AI),
- if the said exit detection cell (1AS2) is not obscured, control of the synchronization conveyor (1AS) and the injection device (1AI) in reverse mode according to a third pre-determined control law, until the exit detection cell (1AS2) is obscured,
- continuation of the reverse control of the synchronization conveyor (1AS) according to a fourth pre-determined control law, until the exit detection cell (1AS2) is no longer obscured,
- stop control of the synchronization conveyor (1AS) for a pre-determined period, and
- control of the synchronization conveyor (1AS) in forward mode according to a fifth pre-determined control law, until the exit detection cell is obscured.

3. Synchronisation method according to claim 2, **characterized in that** the successive control stages of the synchronization conveyor and the injection device according successively to the first, second, third, fourth and fifth control laws are repeated until the exit detection cell test shows that the said exit detection cell is still obscured at the end of a pre-determined dwell time.

4. Method according to any one of the preceding claims, **characterized in that** it is implemented by programming a synchronization control unit, in connection with the control of the synchronization conveyor (1AS) and the injection device (1AI) drive motors, the said synchronization control unit being equipped to receive signals sent by the exit detection cells (1AS1) and (1AS2).

5. Method according to any one of the preceding claims, **characterized in that** it is implemented in a specific synchronization control unit added to pre-existing injection command/control equipment.

6. Method according to claim 5, **characterized by** the following stages:
- the control signals (SC) for the drive motors for the synchronization conveyor and injection device generated by the pre-existing command/control equipment are reproduced exactly at the terminals of the specific control unit (3C), and
- the specific control unit (3C) is provided with a loss of synchronization alarm signal (3P) generated by the pre-existing command and control equipment.

7. System for synchronizing loads before their injection onto a tilt tray type sorting machine, for the implementation of the synchronization method according to any one of the preceding claims, said machine comprising a set of trays (1AP) moving at a pre-determined speed in front of an injection system comprising conveyor means (1AQ1, 1AQ2) to advance the loads one by one towards an injection site, a so called synchronization conveyor (1AS) to position a load coming from the said conveyor means in a position allowing for it to be placed on a tray in ballistic mode, a device (1AI) for injecting a load coming from the said synchronization conveyor onto the sorting machine, and means of detecting the position of the loads within the injection system comprising a detection cell (1AS2) arranged approximately at the exit of the synchronization conveyor (1AS), **characterized in that** it comprises:
- first means to control the synchronization conveyor (1AS) and the injection device (1AI), when a load has overshot the cell (1AS2) without having the normally expected position, in a reverse movement with slight acceleration and a top speed of a pre-determined value V_{AR}, so that the load returns to obscure the cell (1AS2),
- these first control means being designed to be activated until the cell (1AS2) is no longer obscured, and for a pre-determined period, and
- second means to control the conveyor in a forward movement with slight acceleration and to a top speed of a pre-determined value V_{AV} until the cell is obscured (1AS2).

8. System according to claim 7, **characterized in that** it is embodied in the form of a specific control unit dedicated to synchronization, transparent to a pre-existing injection command/control unit.

9. System according to claim 8, **characterized in that** it also comprises an additional detection cell (3S3) to replace or supplement a pre-existing exit detection cell (3S2).

10. System according to one of claims 8 or 9, **characterized in that** the specific control unit (3C) is connected to a monitoring computer for the sorting installation, via a data link (3T), in particular to transmit a fault message and a fault cancellation message.

11. System according to any one of claims 7 to 10, **characterized in that** it is implemented on a dynamic injection site comprising at least one synchronization conveyor with a load stop position and a synchronization sensor.

12. Application of the synchronization method according to any one of claims 1 to 6 to a new baggage sorting system.

13. Application of the synchronization method according to any one of claims 1 to 6 to an existing baggage sorting system.
